Europäisches Patentamt

European Patent Office

Office européen des brevets

(11) Publication number: **0 109 248 B1**

# EUROPEAN PATENT SPECIFICATION

(45) Date of publication of patent specification: 29.05.91   (51) Int. Cl.5: **G11B 5/09, G11B 20/10**

(21) Application number: 83306794.5

(22) Date of filing: 08.11.83

(54) Magnetic recorder write data compensating circuit.

(30) Priority: **10.11.82 JP 197192/82**

(43) Date of publication of application:
**23.05.84 Bulletin 84/21**

(45) Publication of the grant of the patent:
**29.05.91 Bulletin 91/22**

(84) Designated Contracting States:
**DE FR GB**

(56) References cited:
**DE-A- 3 338 877**
**GB-A- 2 006 489**
**US-A- 3 482 228**
**US-A- 3 879 342**

**IBM TECHNICAL DISCLOSURE BULLETIN, vol.
16, no. 5, October 1973, pages 1545-1546,
New York, US; R.L. WEISS: "Polarity indepen-
dent write compensation"**

**IBM TECHNICAL DISCLOSURE BULLETIN, vol.
17, no. 1, June 1974, pages 9-10, New York,
US; E.G. McDONALD, Jr. et al.: "Digital con-
trolled phase shifting"**

**IBM TECHNICAL DISCLOSURE BULLETIN, vol.
13, no. 6, November 1970, pages 1533, New**

**York, US; F.K. ALLEN: "Fail-safe write encode
and precompensation circuit"**

**ELECTRONICS LETTERS, vol. 10, no. 23, 14th
November 1974, pages 492-493, Hitchin,
Herts, GB; B.G. TAYLOR: "Phase-distortion
compensator for high-density digital
magnetic-tape recording"**

**IBM TECHNICAL DISCLOSURE BULLETIN, vol.
21, no. 9, february 1979, pages 3773-3774,
New York, US; S.K. HOO: "Dynamic precom-
pensation system"**

(73) Proprietor: **FUJITSU LIMITED
1015, Kamikodanaka Nakahara-ku
Kawasaki-shi Kanagawa 211(JP)**

(72) Inventor: **Uno, Hiroshi
Terasu-hausu 2-4 213-41, Sasanodai Asahi-
ku
Yokohama-shi Kanagawa 241(JP)**

(74) Representative: **Skone James, Robert Edmund
et al
GILL JENNINGS & EVERY 53-64 Chancery
Lane
London WC2A 1HN(GB)**

## Description

This invention relates to a write data generating circuit in a magnetic recorder using a magnetic disc, a magnetic tape or the like, and more particularly to a write data compensating circuit to be incorporated in the write data generating circuit, which write data compensating circuit usually operates first to enquire whether a pitch between two adjacent inversions of magnetization is long or short, which pitch is determined in dependence upon binary data to be written, and then operates to preshift the inversion timing of magnetization in accordance with such enquiry.

In a digital magnetic recorder, it is desirable to reduce the interval between binary data to increase the amount of data stored therein. This results in a very high density of inversions of magnetization on the magnetic recording medium. It is well known that, when inversions of magnetization are formed with a very high density on a medium, the waveform of the signal reproduced from the medium in a read mode often suffers from undesired distortion due to the so-called "pulse crowding effect" in which a peak shift (referred to hereinafter) occurs.

In the prior art, at least three clocks having the same frequency but different phase are used in the write data compensating circuit so as to cope with the aforesaid pulse crowding effect. The aforesaid preshift for the inversion timing of magnetization is achieved by suitably selecting one of the three clocks in accordance with the pitch to be determined in dependence upon the binary data to be written.

There are, however, problems with the above-mentioned prior art write data compensating circuit. As will be explained in detail hereinafter, firstly the amount of the preshift for the inversion of magnetization cannot be so large. Secondly, logic elements with high operating speed must be employed in the write data compensating circuit.

IBM Technical Disclosure Bulletin Vol 16, No.5 pages 1545-1546 describes a write data compensating circuit including a shifting circuit for shifting binary data in time series in synchronisation with a clock so as to produce a front signal, a present signal and a rear signal of the binary data, a combination logic circuit to receive at least the front, present and rear signals and to generate write data the combination logic circuit comprising first means operative to detect the pitches between the present signal and the front and the rear signal of the binary data respectively and second means for generating the write data with a phase relative to the present signal related to the detected pitches. In this known system, various versions of the present signal are generated having different delays and the appropriate signal is then selected to constitute the write data. This involves making use of a polarity trigger and polarity gates together with a patch panel and delay line all of which leads to the complexity of the apparatus which is generally undesirable.

US-A-3482228 describes a magnetic recorder, including a shifting circuit for shifting binary data in time series in synchronisation with a clock so as to produce a front signal, a present signal and a rear signal of the binary data, a combination logic circuit to receive at least the front, present and rear signals and to generate write data the combination logic circuit comprising first means operative to detect the pitches between the present signal and the front and the rear signal of the binary data respectively and second means for generating the write data with a phase relative to the present signal related to the detected pitches, wherein the second means is responsive only to outputs from the first means; and in that the second means adjusts the phase of the present signal by selectively delaying the present signal in accordance with the pitches between the present signal and the front and the rear signal of the binary data respectively.

These known circuits are complex and the present invention seeks to simplify the known constructions.

In accordance with the present invention, a write data comprising circuit is characterized in that the first means is operative to detect a variety of pitches of the inversions of magnetization, the variety of pitches being classified into at least four modes, namely a first mode in which the present signal is sandwiched between the front and rear signal, a second mode in which the present signal is accompanied by the front signal only, a third mode in which the present signal is accompanied by the rear signal only, and a fourth mode in which no front and rear signals exist, in that the second means is provided, at its input stage, with registers for momentarily storing the present signals provided in the first to fourth modes and for producing each of the thus stored present signals in synchronisation with the clock (CLK); in that the second means includes a first delay unit having a first delay time and a second delay unit having a second delay time longer than the first delay time; and in that the second means is operative to produce from the appropriate register, as the write data (WD), the present signal without passing through the first and second delay units in the second mode, by way of the second delay unit in the third mode, by way of the first delay unit in the first mode, and by way of the first delay unit in the fourth mode, respectively.

An embodiment of the invention will now be described, by way of example, with reference to the accompanying drawings, wherein

Figs. 1A to 1E depict waveforms of signals used for explaining the so-called pulse crowding effect;

Figs. 2A, 2B and 2C are circuit diagrams of three major parts of a prior art write data compensating circuit;

Fig. 3 depicts waveforms of signals appearing in the circuit of Figs. 2A, 2B and 2C;

Fig.s 4A and 4B are circuit diagrams of two major portions of a write data compensating circuit according to the present invention;

Fig. 5 depicts waveforms of signals appearing in the circuits of Figs. 4A and 4B; and

Fig.6 illustrates a detailed example of part of the circuit shown in Fig.4B.

Before describing the preferred embodiments, a discussion will be made of the prior art for easy comprehension of the present invention.

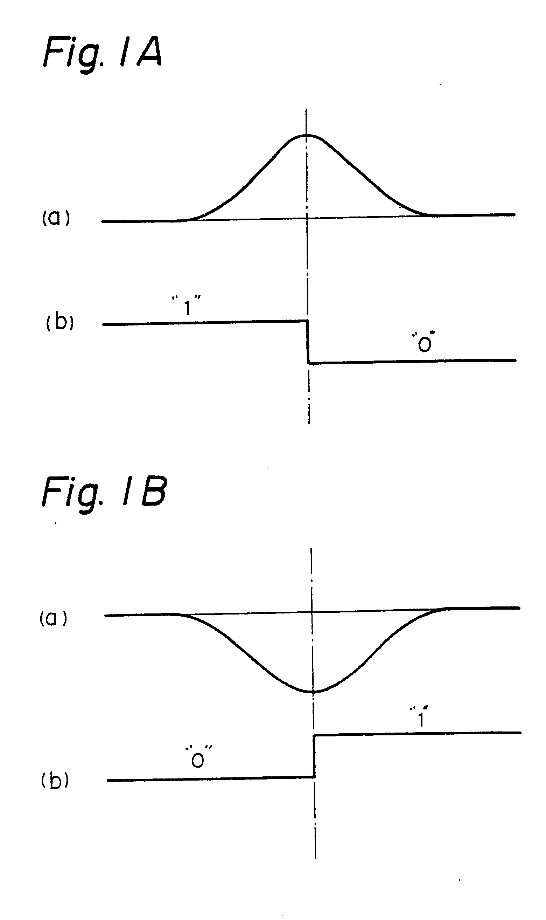

Figs.1A to 1E depict waveforms of signals used for explaining the so-called pulse crowding effect. In each of these figures, row (b) depicts the waveform of a write current in a write mode and row (a) depicts the waveform of a read voltage in a mode for reading data created by the write current of row (b) from the magnetic recording medium.

The waveforms of Figs.1A and 1B represent the case where no pulse crowding effect occurs. That is, in each figure the peak level of the read voltage appears just at a timing when the inversion of magnetization takes place, i.e. when the write current of logic "1" changes to logic "0" and vice versa.

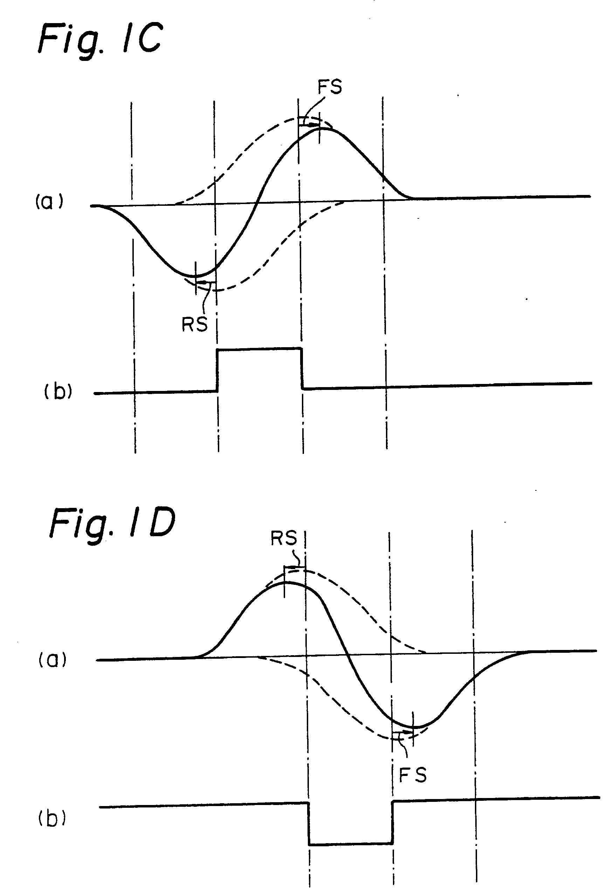

Contrary to the above, the waveforms of Figs.1C to 1E represent the case where the pulse crowding effect occurs. In these figures, broken line curves represent the waveforms which would appear if each inversion of magnetization took place alone, i.e. no adjacent inversion of magnetization existed. The solid line curves represent the waveforms which actually appear. Each vertical chain dotted line indicates a normal write timing. The minimum allowable pitch of the inversion of magnetization is defined by the period in which the chain dotted lines occur.

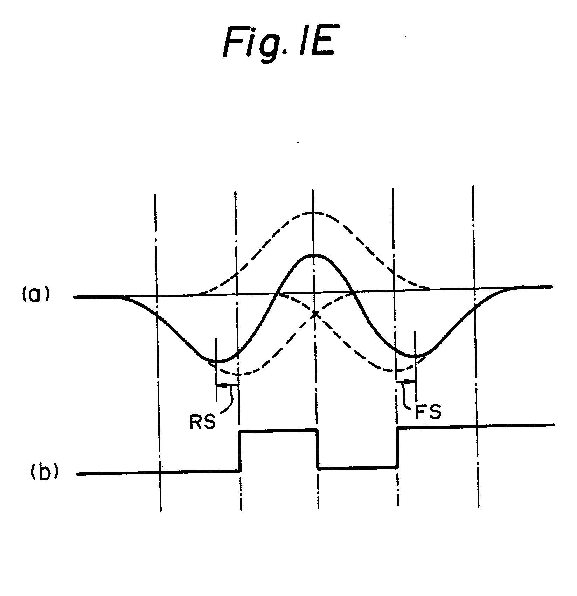

In each of the solid line curves, the reference characters FS and RS denote a frontward peak shift and a rearward peak shift,respectively. When the density of the inversions of magnetization is increased, the base portion of one waveform extends to the peak portion of another waveform, thereby causing the undesired frontward or rearward peak shift (TS,RS). Under such undesired waveforms, even though the write current is generated with the normal write timing, as shown in, for example, Fig.1E, the corresponding read voltage is produced with the solid line curves which are derived from the sum, at each time, of the imaginary broken line curves. Thus, each peak level of the solid line curve is shifted, due to interference of the adjacent waveform, toward the portion where the inversion of magnetization having a wider pitch is located. Thus, forward and rearward peak shifts occur.

This is the "pulse crowding effect." The write data compensating circuit operates to compensate such peak shifts by shifting the actual write timing with respect to the normal write timing. This operation is called a "write compensation". Such write compensation is also performed by shifting, in advance, the write timing frontward or rearward for the purpose of improving the frequency-delay characteristics of the read data when wider pitches of the inversions of magnetization are provided at the front and rear sides with respect to the present inversion of magnetization.

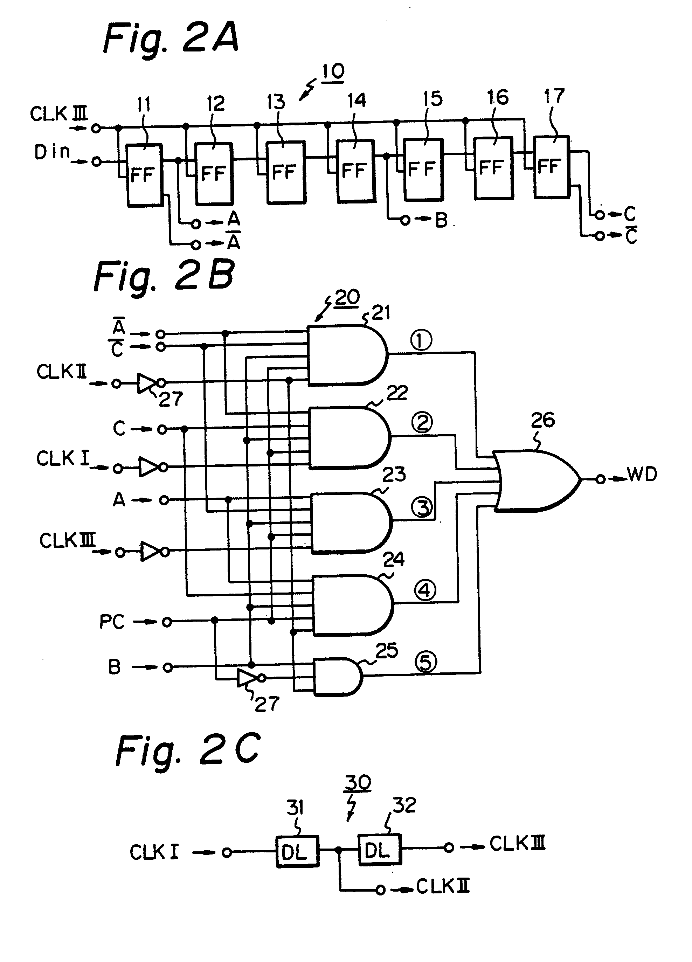

Figures 2A, 2B, and 2C are circuit diagrams of three major parts of the prior art write data compensating circuit. In these figures, reference numerals 10, 20, and 30 represent a shift resistor, a combination logic circuit, and a delay circuit.

The shift resistor 10 is composed of flip-flops (FF) 11 through 17. In the example of Fig. 2A, since the binary data $D_{in}$ are modulated in a 2-by-7 modulation mode, seven flip-flops 11 through 17 are required.

The combination logic circuit 20 is composed of AND gates 21 through 25, an OR gate 26, and inverters 27.

The delay circuit 30 is composed of a first delay element (DL) 31 and a second delay element (DL) 32. The delay circuit 30 produces two types of clocks, i.e., a clock CLKII and a clock CLKIII, based on a clock CLKI. The clock CLKII is delayed by the element 31 with a predetermined delay time with respect to the clock CLKI and the clock CLKIII is delayed by the element 32 with a predetermined delay time with respect to the thus delayed clock CLKII. It should be recognized that the three CLK's I, II, and III are also available for modulating the binary data under a modified frequency modulation (MFM) method.

The binary data $D_{in}$ (refer to Fig. 2A) to be recorded are serially supplied to the shift register 10 and then shifted sequentially therein in synchronization with the clock CLKIII. The binary data creates the inversions of magnetization on the magnetic recording medium.

The first FF 11 produces both an output signal A and an inverted output signal $\overline{A}$. The fourth FF 14 produces an output signal B. The last FF 17 produces both an output signal C and an inverted output signal $\overline{C}$. These signals A, $\overline{A}$, B, C, and $\overline{C}$ are applied to the combination logic circuit 20 of Fig. 2B.

A preshift command signal PC is also applied, if necessary, to the combination logic circuit 20. The signal PC is useful in, for example, a magnetic disc recorder. It is known that the pulse crowding effect occurs especially in the inner tracks of a magnetic disc and not so much in the outer tracks thereof. Thus, a preshift command signal PC of logic "1" is given when the data $D_{in}$ is to be written in an inner track, while a preshift command signal PC of logic "0" is given when the data $D_{in}$ is to be written in an outer track.

The preshift command signal PC may also be used as a signal indicating other particular conditions in a write operation mode. Thus, the preshift command signal PC is given logic "1" if the preshift must be performed for the data $D_{in}$ and is given logic "0" if the preshift is not required therefor. The signal PC is applied directly to the AND gates 21 through 24, while the inverted signal PC is applied to the AND gate 25, by means of the inverter 27 shown at the bottom of Fig. 2B.

In the case of Fig. 1A or 1B, i.e., when receiving the signals $\overline{A}$, $\overline{C}$, B and PC of logic "1", the AND gate 21, is selected and produces, via the OR gate 26, write data WD in synchronization with CLKII. The output signal $\overline{A}$ of logic "1", i.e., signal A of logic "0" expresses that no inversion of magnetization is created rear of the output signal B. The output signal $\overline{C}$ of logic "1", i.e., signal C of logic "0", expresses that no inversion of magnetization is created in front of the output signal B. The front signal C($\overline{C}$), the intermediate signal B, and the rear signal A($\overline{A}$) appear in time series in the order mentioned.

In the case of Fig. 1D, i.e., when receiving the signals $\overline{A}$, C, B, and PC of logic "1", the AND gate 22 is selected and produces, via the OR gate 26, the write data WD in synchronization with CLKI, which is most advanced in phase. The output signal C of logic "1" expresses that the inversion of magnetization is created in front of the signal B.

In the case of Fig. 1C, i.e., when receiving the signals A, $\overline{C}$, B, and PC of logic "1", the AND gate 23 is selected, and produces, via the OR gate 26, the write data WD in synchronization with CLKIII, which is most delayed in phase. The output signal A of logic "1" expresses that the inversion of magnetization is created rear of the signal B.

In the case of Fig. 1E, i.e., when receiving the signals A, C, B, and PC, all of logic "1", the AND gate 24 is selected. That is, the inversions of magnetization are created in front and rear of the signal B. Then, the AND gate 24 produces, via the OR gate 26, the data WD, in synchronization with the CLKII. The AND gate 25 is selected only when the signal PC is logic "0". In this case, the aforesaid AND gates 21 through 24 are all closed, and thereby the signal B passes through the gates 25 and 26 to form the data WD in synchronization with the intermediate clock CLKII.

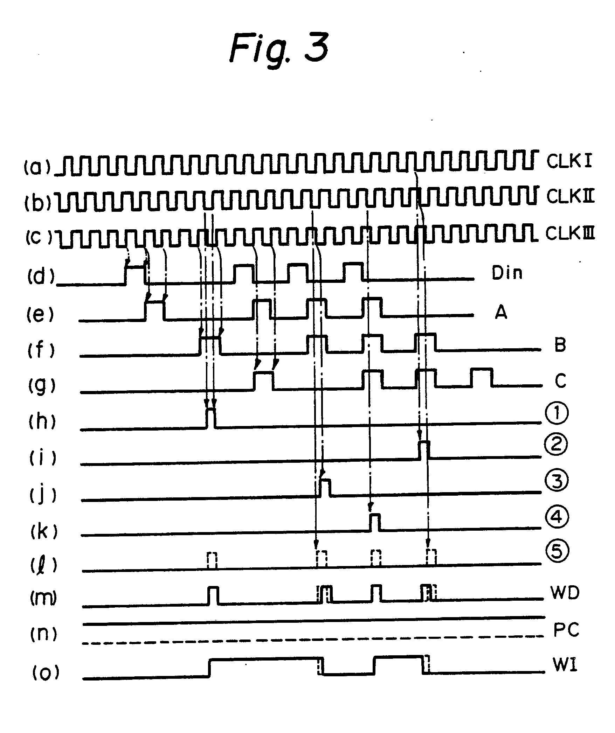

Figure 3 depicts waveforms of signals appearing in the circuit of Figs. 2A, 2B, and 2C. The operation of the prior art write data compensating circuit will be more clarified with reference to Fig. 3 and also Figs. 2A, 2B, and 2C. Reference characters CLKI, CLKII, CLKIII, $D_{in}$ , A, B, C, WD, and PC in rows (a), (b), (c), (d), (e), (f), (g), (m), and (n) of Fig. 3 are already explained. Rows (h), (i), (j), (k), (l), and (o) represent outputs ① , ② , ③ , ④ , and ⑤ from gates 21 through 25 and a write current WI to be supplied to a magnetic head (not shown) in a magnetic recorder, respectively. The write current is already explained with reference to Figs. 1A through 1E.

When the binary data $D_{in}$ (row (d)) is supplied to the shift register 10, the data $D_{in}$ is shifted in synchronization with the CLKIII (row (c)). Thus, the output signals A, B, and C are produced from the respective flip-flops as shown in rows (e), (f), and (g). When the preshift command signal PC is logic "0" (row (n)), the combination logic circuit 20 produces the output signal B, as the write data WD (row (m)), in synchronization with the CLKII (row (b)). The pulses indicated by broken lines in Fig. 3, are obtained under this condition, i.e., no need of a preshift operation.

When the preshift command signal PC is logic "1", the content of the signal B is produced from the AND gate 21 in synchronization with the CLKII if both signals A and C are logic "0" and is produced from the AND gate 24 in synchronization therewith if both signals A and C are logic "1". If the signal A is logic "0" and the signal C is logic "1", the content of the signal B is produced from the AND gate 22 in synchronization with the CLKI, and thereby the write data WD is advanced in phase. This phase is clear from the waveforms of the signals ② and ⑤ shown in rows (i) and (l). Further, if the signal A is logic "1" and the signal C is logic "0", the content of the signal B is produced from the AND gate 23 in synchronization with the CLKIII, and thereby the write data WD is delayed in phase. This phase delay is clear from the waveforms of the signals ③ and ⑤ shown in rows (j) and (l).

As apparent from the above explanations, in the prior art, it is necessary to achieve the combination logic operations in the circuit 20 and to pass the related clocks through respective AND gates within the term of the pulse width of each of the output signals A, B, and C, i.e., within one specific clock period. This causes the previously mentioned problems that the amount of the preshift for the data $D_{in}$ , i.e., for the inversions of magnetization, cannot be so large and that high speed operable logic elements must be used. The first problem is due to the fact that the amount of the preshift cannot be larger than the phase difference between the clocks. The second problem is due to the fact that the combination logic operation must be completed within the one specific clock period. This increases the cost of the write data compensating circuit.

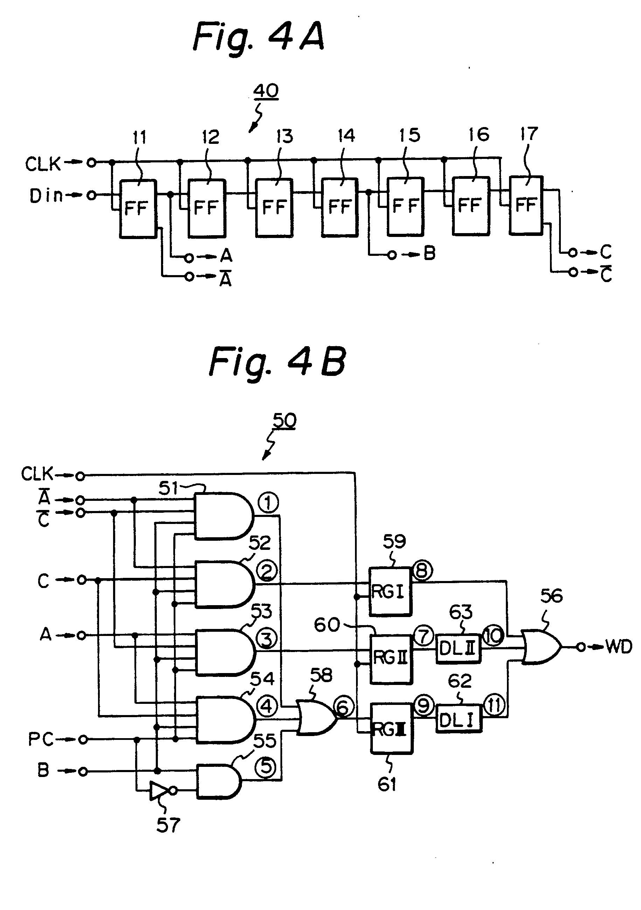

Figures 4A and 4B are circuit diagrams of two major portions of a write data compensating circuit according to an embodiment of the present invention. The write data compensating circuit is basically composed of a first means for discriminating a pitch of each two adjacent inversions of magnetization from a binary data ($D_{in}$) to be recorded on a magnetic recording medium and a second means for adjusting the pulse width of the write data (WD) by selectively delaying the write data (WD) according to the pitch of each two adjacent inversions of magnetization detected by the first means.

The first means and second means are both realized as shown by a combination logic circuit 50 in Fig. 4B, but, however, are not restricted to the same. That is, the first means functions basically to discriminate a pitch of each two adjacent inversions of magnetization. However, it is enough for the first means to function, in practical use, to discriminate four modes: a first mode wherein both front and rear inversions of magnetization exist close to the present write data, a second mode wherein only a front inversion of magnetization exists close to the present write data, a third mode wherein only a rear inversion of magnetization exists close to the present write data, and a fourth mode wherein no front or rear inversions of magnetization exist close thereto. For finer control, more than four modes are preferable.

The second means basically functions to adjust the phase of the write data. In practice, the second means is composed of at least two delay elements which delay the occurrence of each write data.

Thus, the first and second means can in practice be realized as shown in Fig. 4B.

A shift register 40 of Fig. 4A is substantially the same as the shift register 10 in Fig. 2A, except that the register 40 is driven by a clock CLK. The signal clock CLK is common to the combination logic circuit 50 of Fig. 4B. Thus, the three different clocks CLKI, CLKII, and CLKIII of the prior art are replaced with a single common clock CLK. Further, the clock CLK is not essential for the combination logic circuit 50.

In the circuit 50, AND gates 51 through 55 respectively correspond to the prior art AND gates 21 through 25 in Fig. 2B. OR gate 56 and an inverter 57 are substantially the same as the members 26 and 27 of Fig. 2B. The differences here are that, first, an OR gate 58, first, second, and third registers (RGI, RGII, RGIII) 59, 60, 61, a first delay unit (DLI) 62 and a second delay unit (DLII) 63 are newly employed in the circuit 50 and, second, the AND gates 51 through 55 do not receive any clock, as in the prior art. In the above arrangement, the registers 59, 60 and 61 are not essential for the circuit 50, as with the clock CLK.

The meanings of the reference characters $D_{in}$, A, $\overline{A}$, B, C, $\overline{C}$, PC and WD are the same as those explained heretofore. In the case of Fig. 1A or 1B, i.e., when receiving the signals $\overline{A}$, $\overline{C}$, B and PC of logic "1", the AND gate 51, is selected, and produces, via the OR gates 58 and 56, a write data WD with a delay time $\tau I$ defined by the delay unit 62.

In the case of Fig. 1D, i.e., when receiving the signals $\overline{A}$, C, B, and PC of logic "1", the AND gate 52 is selected and produces, via the OR gate 56, the write data WD.

In the case of Fig. 1C, i.e., when receiving the signals A, $\overline{C}$, B, and PC of logic "1", the AND gate 53 is selected and produces, via the OR gate 56, the write data WD with a delay time $\tau II$ ($\tau II > \tau I$) defined by the delay unit 63.

In the case of Fig. 1E, i.e., when the signals A, C, B, and PC are all of logic "1", the AND gate 54 is selected. That is, the inversions of magnetization are created in front and rear of the signal B. Then, the AND gate 54 produces, via the OR gates 58 and 56, the data WD with the delay time $\tau I$ by the unit 62. The AND gate 55 is selected only when the signal PC is logic "0". In this case, the aforesaid AND gates 51 through 54 are all closed, and thereby the signal B passes through the gates 55, 58 and 56 to form the data WD with the delay time $\tau I$ by the unit 62.

As mentioned earlier, in the combination logic circuit 50, it is not essential to employ the registers 59, 60, and 61. It is, however, preferable in view of the accuracy of write compensation. In the case of not using the registers 59, 60, and 61, the output from the AND gate 52 would directly be applied to the OR gate 56. Similarly, the output from the AND gate 53 would directly be applied, via the unit 63, to the OR gate 56. The outputs from the AND gates 51, 54, and 55 would directly be applied, via the OR gate 58 and the unit 62, to the OR gate 56. In this case, however, the write data WD would necessarily include transfer delay inherent to each of the gates 51 through 55 and 58. Therefore, a correct write compensation could not be guaranteed due to variances in the transfer delays of these gates. When the registers 59, 60, and 61 are introduced in the circuit 50, each of the write data to be applied to the OR gate 56, the delay unit 62, or the delay unit 63 is corrected to have the same pulse timing due to a clocking of the common clock CLK regardless of the aforesaid variances in the transfer delays.

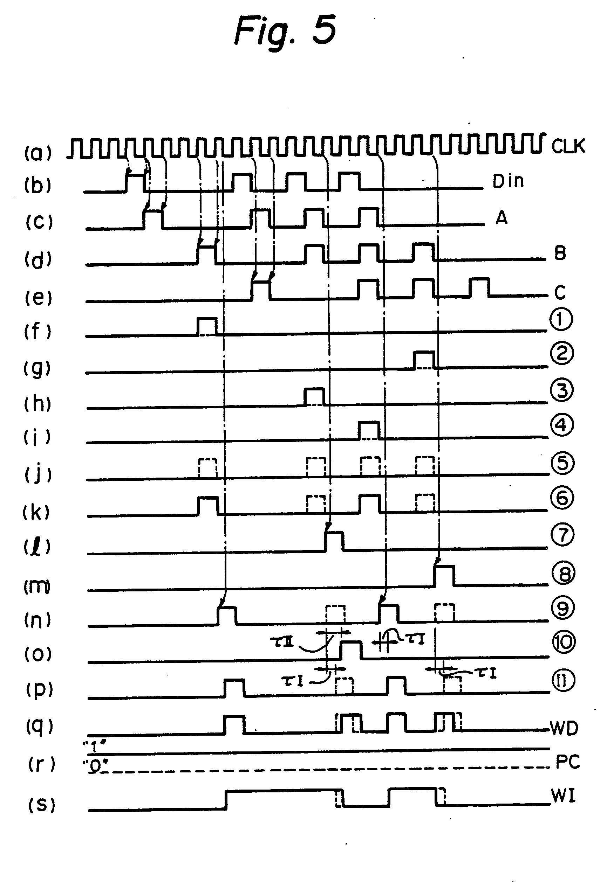

Figure 5 depicts waveforms of signals appearing in the circuits of Figs. 4A and 4B. The operation of the write data compensating circuit will be more clarified with reference to Fig. 5 and also Figs. 4A and 4B. Reference characters CLK, $D_{in}$, A, B, C, WD, PC and WI in rows (a), (b), (c), (d), (e), (q), and (s) of Fig. 5 are already explained, while rows (f) through (p), represent outputs ① through ⑪ from the gates, registers, or delay units. When the binary data $D_{in}$ (row (b)) is supplied to the shift register 40, the binary data $D_{in}$ is shifted in synchronization with the CLK (row (a)). Thus, the output signals A, B, and C are produced from respective flip-flops as shown in rows (c), (d), and (e).

When the preshift command signal PC is logic "0" (row (r)), the combination logic circuit 50 produces the output signal B as the write data WD (row (m)).

When the preshift command signal PC is logic "1", the content of the signal B is produced from either one of the AND gates 51 through 54.

The AND gate 51 is opened, as mentioned previously, when the signal B is logic "1" and the signal A and C are both logic "0", i.e., $\overline{A}$ and $\overline{C}$ are both logic "1". Then, the output ① of logic "1" is produced therefrom. The AND gate 52 is opened when the signals B and C are both logic "1" and the signal A is logic "0". Then, the output ② of logic "1" is produced therefrom. The AND gate 53 is opened when the signals A and B are both logic "1" and the signal C is logic "0". Then, the output ③ of logic "1" is produced therefrom. The AND gate 54 is opened when the signals A, B, and C are all logic "1". Then, the output ④ of logic "1" is produced therefrom.

The output ② , when logic "1", is first set in the register 59 and then provided, as the write data WD, directly from the OR gate 56, in synchronization with the clock CLK. The output ③ , when logic "1", is first set in the register 60 and then provided, via the delay unit 63, as the write data WD from the OR gate 51. Each of the data WD is thus synchronized with the same clock CLK.

As apparent from the circuit 50, when either the AND gate 51 or 54 is opened, i.e., corresponding to the case of Fig. 1A and 1B or Fig. 1E, respectively, the preshift operation is not needed. In such a case, the delay unit 62 is selected.

Contrary to the above, if the front signal C is logic "1" and the rear signal A is logic "0", i.e., the AND gate 52 is to be opened, no delay is applied to the write data WD. Accordingly, the output ② from the AND gate 52 is relatively advanced in timing by the delay time $\tau l$ (refer to row (p) of Fig. 5) of the delay unit 62, relative to the write data WD supplied via the OR gate 58.

On the other hand, if the front signal C is logic "0" and the signal A is logic "1", i.e., the AND gate 53 is opened, the delay unit 63 is selected. In this case, since the signal A appears rear of the present signal B, the output ③ from the AND gate 53 is delayed in timing by the delay time difference between $\tau l$ and $\tau ll$ (by the delay unit 63), i.e., $\tau ll$-$\tau l$, relative to the write data WD supplied via the OR gate 58, which data needs no preshift. Such signal, needing no preshift, is produced as the output ⑪ in rows (p) of Fig. 5. In row (q) of Fig. 5, the pulses indicated by broken lines represent write data WD to which the preshifts are effected, which results in the write current WI represented with broken lines. This corresponds to the case of Fig. 1E.

Incidentally, as previously mentioned, the write compensation is also performed by shifting the write timing forward or backward for the purpose of improving frequency-delay characteristics of the read data when wider pitches of inversions of magnetization are provided in front or rear of the present inversion of magnetization. To be specific, in the case where the front signal C and the rear signal A, with respect to the present signal B are both logic "0", i.e., the AND gate 51 is opened and the output ① is logic "1", the preshift is necessary for improving the aforesaid characteristics. In such a case, the output ① is not applied to the OR gate 58, as in the previous case, but is set in another separately employed register. Also, another delay element, other than the units 62 and 63, is separately employed. Thus, the preshift is effected frontward or rearward by using three delay units. In this case, alternatively it is possible to newly employ another OR gate for receiving the output ② or ③ and then to have either the output ② or ③ through the OR gate further OR'ed with the output ① by still another OR gate.

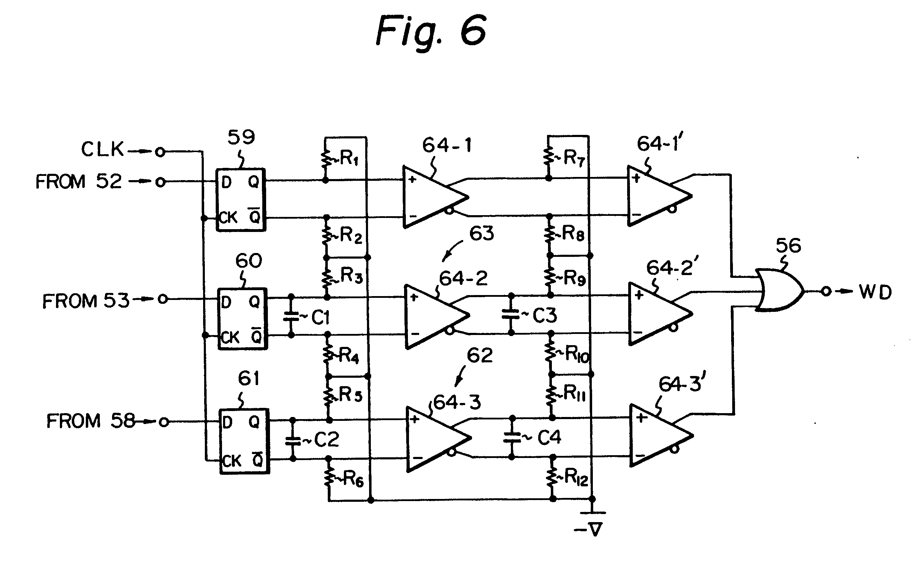

Figure 6 illustrates a detailed example of a part of the circuit 50 shown in Fig. 4B. Reference characters and numerals the same as in Fig. 4B represent the same members. Each of the registers 59, 60, and 61 is composed of, for example, a D flip-flop having a data input terminal D, a clock input terminal CK, an output terminal Q, and an inverted output terminal $\overline{Q}$, or a JK flip-flop. Comparators 64-1, 64-2, and 64-3 are operated by differential output signals from the flip-flops 59, 60, and 61, respectively. In practice, double cascade comparators,such as the pairs 64-1, 64-1'; 64-2, 64-2'; and 64-3, 64-3', are preferable so as to gain a sufficient preshift with respect to the write data WD. The delay units 62 and 63 particularly cooperate with respective capacitors so as to create the aforesaid delay times $\tau l$ and $\tau ll$ in the form of so-called CR time constant circuits. The capacitors C1 through C4 are bridged between respective differential signal line pairs. The resistors R1 through R12 are commonly grounded, at each end of one side. The other side ends are connected to respective signal lines.

As explained above in detail, the amount of preshift is not limited to the small range defined by the pulse width of the clocks, as in the prior art, but can readily be enlarged to some extent.

## Claims

1. A write data compensating circuit in a magnetic recorder, including a shifting circuit (40) for shifting binary data (Din) in time series in synchronisation with a clock (CLK) so as to produce a front signal (C,$\overline{C}$), a present signal (B) and a rear signal (A,$\overline{A}$) of the binary data (Din), a combination logic circuit (50) to receive at least the front (C,$\overline{C}$), present (B) and rear (A,$\overline{A}$) signals and to generate write data (WD), the combination logic circuit comprising first means (51-55) operative to detect the pitches between the present signal (B) and the front (C,$\overline{C}$) and the rear (A,$\overline{A}$) signal of the binary data respectively and second means (62,63) for generating the write data (WD) with a phase relative to the present signal related to the detected pitches, wherein the second means (62,63) adjusts the phase of the present signal (B) by selectively delaying the present signal (B) in accordance with the pitches between the present signal (B) and the front (C,$\overline{C}$) and the rear (A,$\overline{A}$) signal of the binary data (Din) respectively, characterised in that the first means (51-55) is operative to detect a variety of pitches of the inversions of magnetization, the variety of pitches being classified into at least four modes, namely a first mode in which the present signal is sandwiched between the front and rear signal, a second mode in which the present signal is accompanied by the front signal only, a third mode in which the present signal is accompanied by the rear signal only, and a fourth mode in which no front and rear signals exist, in that the second means (58-63) is provided, at its input stage, with registers (59-61) for momentarily storing the present signals provided in the first to fourth modes and for producing each of the thus stored present signals in synchronisation with the clock (CLK); in that the second means includes a first delay unit (62) having a first delay time and a second delay unit (63) having a second delay time longer than the first delay time; and in that the second means is operative to produce from the appropriate register (59-61), as the write data (WD), the present signal without passing through the first and second delay units in the second mode, by way of the second delay unit in the third mode, by way of the first delay unit in the first mode, and by way of the first delay unit in the fourth mode, respectively.

2. A circuit as claimed in claim 1, characterised in that each of the registers (59-61) comprises a D flip-flop having a data input terminal to receive a corresponding present signal, a clock input terminal to receive the clock (CLK), an output terminal to produce the stored present signal in synchronisation with the clock, and an inverted output terminal to produce the inverse of the output terminal signal.

3. A circuit as claimed in claim 1 or claim 2, characterised in that each of the delay units comprises a first comparator (64-1, 64-2, 64-3) to receive differential output signals from the corresponding D flip-flop (59-61) at its output and inverted output terminals, and in that a capacitor ($C_1$,$C_2$) is bridged between a respective differential output signal line pair, which capacitor cooperates with resistors ($R_3$-$R_6$) arranged in the form of a CR time constant circuit.

4. A circuit as claimed in claim 3, characterized in that the first comparators (64-2, 64-3) are further coupled to respective second comparators (64-2', 64-3') via differential output signal line pairs between which a respective capacitor ($C_3$,$C_4$) is bridged and cooperates with resistors ($R_9$-$R_{12}$) so as to form a CR time constant circuit.

## Revendications

1. Circuit de compensation de données à écrire comprenant un circuit de décalage (40) pour décaler les données binaires (D$_{in}$) dans une série temporelle en synchronisme avec une horloge (CLK) de façon à produire un signal de front (C, C/), un signal présent (B) et un signal arrière (A, A/) des données binaires (D$_{in}$), un circuit (50) de combinaison logique pour recevoir au moins les signaux de front (C, C/), présent (B) et arrière (A, A/), et pour générer des données à écrire (wD), le circuit de combinaison logique comprenant des premiers moyens (51- 55) actifs pour détecter les pas entre le signal présent (B) et les signaux de front (C, C/) et arrière (A, A/) des données binaires respectivement et des seconds moyens (62, 63) pour engendrer les données à écrire (WD) avec une phase relative au signal présent (B) associée aux pas détectés, dans lequel les seconds moyens (62, 63) ajustent la phase du signal présent (B) en retardant de manière sélective le signal (B) en fonction des pas entre le signal présent (B) et les signaux de front (C, C/) et arrière (A, A/) de la donnée binaire ($D_{in}$) respectivement,

caractérisé en ce que les premiers moyens (51, 55) sont actifs pour détecter une variété de pas des inversions de la magnétisation,

la variété des pas étant répartie en au moins quatre modes, c'est-à-dire :

- un premier mode dans lequel le signal présent est intercalé entre le signal de front et arrière,
- un second mode dans lequel le signal présent est acompagné par le signal de front seulement,
- un troisième mode dans lequel le signal présent est accompagné par le signal arrière seulement,
- et un quatrième dans lequel aucun signaux de front et arrière n'existe,

en ce que les seconds moyens (58- 63) sont pourvus, à leurs étages d'entrée, de registres (59- 61) pour stocker momentanément les signaux présent fournis dans les premier au quatrième mode et, pour finir, dans chacun des signaux présent ainsi stockés en synchronisme avec l'horloge (CLK) ; en ce que les seconds moyens comprenent une première unité de retard (62) ayant un premier temps de retard et une seconde unité de retard ayant un second temps de retard plus grand que le premier temps de retard ; et en ce que les seconds moyens sont actifs pour produire le signal présent comme données à écrire (WD), grâce aux registres appropriés (59- 61), sans passer par la première et la seconde unités de retard dans le second mode, en passant par la seconde unité de retard dans la troisième mode, en passant par la première unité de retard dans le premier mode et en passant par la première unité de retard dans le quatrième mode, respectivement.

2. Circuit selon la revendication 1, caractérisé en ce que chacun des registres (59-61) comporte un bascule flip-flop de type D présentant une borne d'entrée de données pour recevoir un signal présent correspondant, une borne d'entrée d'horloge pour recevoir l'horloge (CLK), une borne de sortie pour produire le signal présent stocké en synchronisme avec l'horloge, et une borne de sortie inversée pour produire l'inverse du signal de la borne de sortie.

3. Circuit selon la revendication 1 ou la revendication 2, caractérisé en ce que chacune des unités de retard comporte un premier comparateur (64-1, 64-2, 64-3) pour recevoir de signaux de sortie différentiels provenant des bascules D (59- 61) à ses bornes de sortie et de sortie inversée et en ce que un condensateur (C1, C2) est monté en pont entre une paire de lignes respectives de sortie du signal différentiel, lequel condensateur coopère avec des résistances (R3 - R6) montées sous la forme d'un circuit à constante de temps RC.

4. Circuit selon la revendication 3, caractérisé en ce que les premiers comparateurs (64-2, 64-3) sont de plus couplés à des seconds comparateurs respectifs (64-2', 64-3') via des paires de lignes de signaux de sortie différentiels entre lesquels un condensateur respectif (C3, C4) est monté en pont et coopère avec des résistances (R9-R12) de façon à former un circuit à constante de temps RC.

**Ansprüche**

1. Schreibdatenkompensationsschaltung in einem magnetischen Aufzeichnungsgerät, mit einer Verschiebeschaltung (40) zum Verschieben binärer Daten (Din) in Zeitserien in Synchronisation mit einem Takt (CLK), um so ein Vordersignal (C, $\overline{C}$), ein gegenwärtiges Signal (B) und ein hinteres Signal (A, $\overline{A}$) der binären Daten (Din) zu erzeugen, einer Kombinationslogikschaltung (50), um wenigstens das vordere (C, $\overline{C}$), das gegenwärtige (B) und das hintere (A, $\overline{A}$) Signal zu empfangen und um Schreibdaten (WD) zu erzeugen, welche Kombinationslogikschaltung eine erste Einrichtung (51-55) umfaßt, die betreibbar ist, um die Abstände zwischen dem gegenwärtigen Signal (B) und dem vorderen Signal (C, $\overline{C}$), beziehungsweise dem hinteren Signal (A, $\overline{A}$) der binären Daten zu detektieren, und eine zweite Einrichtung (62, 63), um die Schreibdaten (WD) mit einer Phase relativ zu dem gegenwärtigen Signal bezogen auf die detektierten Abstände zu erzeugen, bei welcher die zweite Einrichtung (62, 63) die Phase des gegenwärtigen Signals (B) justiert, indem sie selektiv das gegenwärtige Signal (B) in Übereinstimmung mit den Abständen zwischen dem gegenwärtigen Signal (B) und dem vorderen Signal (C, $\overline{C}$), beziehungsweise dem hinteren Signal (A, $\overline{A}$) der binären Daten (Din) verzögert, dadurch gekennzeichnet, daß die erste Einrichtung (51-55) betreibbar ist, um eine Varietät der Abstände der Inversionen der Magnetisierung zu detektieren, wobei die Varietät der Abstände in wenigstens vier Moden klassifiziert wird, nämlich einen ersten Modus, in welchem das gegenwärtige Signal sandwichartig zwischen dem vorderen und dem hinteren Signal angeordnet ist, einen zweiten Modus, in dem das gegenwärtige Signal nur von dem vorderen Signal begleitet wird, einen dritten Modus, in dem das gegenwärtige Signal nur von dem hinteren Signal begleitet wird, und einen vierten Modus, in dem kein vorderes und kein hinteres Signal existiert, daß die zweite Einrichtung (58-63), an ihrer Eingangsstufe, Register (59-61) umfaßt, um momentan die gegenwärtigen Signale zu speichern, die in den ersten vier Moden enthalten sind, und um jedes der so gespeicherten gegenwärtigen Signale synchron mit dem Takt (CLK) zu erzeugen; daß die zweite Einrichtung eine erste Verzögerungseinheit (62) umfaßt, die eine erste Verzögerungszeit hat, und eine zweite Verzögerungseinheit (63), die eine zweite Verzögerungszeit hat, die länger als die erste Verzögerungszeit ist; und daß die zweite Einrichtung betreibbar ist, um von dem geeigneten Register (59-61), als die Schreibdaten (WD), das gegenwärtige Signal zu erzeugen, ohne durch die ersten und zweiten Verzögerungseinheiten in dem zweiten Modus, über die zweite Verzögerungseinheit in den dritten Modus, über die erste Verzögerungseinheit in dem ersten Modus bzw. über die erste Verzögerungseinheit in dem vierten Modus hindurchzutreten.

2. Schaltung nach Anspruch 1, dadurch gekennzeichnet, daß jedes der Register (59-61) ein D-Flipflop umfaßt, welches einen Dateneingangsanschluß hat, um ein entsprechendes gegenwärtiges Signal zu empfangen, einen Takteingangsanschluß, um den Takt zu empfangen, einen Ausgangsanschluß, um das gespeicherte gegenwärtige Signal synchron mit dem Takt zu erzeugen, und einen invertierten Ausgangsanschluß, um das Inverse des Ausgangsanschlußsignals zu erzeugen.

3. Schaltung nach Anspruch 1 oder 2, dadurch gekennzeichnet, daß jede der Verzögerungseinheiten einen ersten Komparator (64-1, 64-2, 64-3) umfaßt, um differentielle Ausgangssignale von dem entsprechenden D-Flipflop (59-61) an seinen Ausgangs- und invertierten Ausgangsanschlüssen zu empfangen, und daß ein Kondensator ($C_1$, $C_2$) zwischen einem entsprechenden differentiellen Ausgangssignalleitungspaar brückenartig angeordnet ist, welcher Kondensator mit den Widerständen ($R_3$-$R_6$) in Form einer CR-Zeitkonstantenschaltung angeordnet kooperiert.

4. Schaltung nach Anspruch 3, dadurch gekennzeichnet, daß die ersten Komparatoren (64-2, 64-3) ferner mit entsprechenden zweiten Komparatoren (64-2', 64-3') über Differenzausgangssignal-Leitungspaare gekoppelt sind, zwischen welchen ein entsprechender Kondensator ($C_3$, $C_4$) brückenartig angeordnet ist und mit Widerständen ($R_9$-$R_{12}$) zusammenarbeitet, um so eine CR-Zeitkonstantenschaltung zu bilden.

## Fig. I A

(a)

(b)    "1"    "O"

## Fig. I B

(a)

(b)    "O"    "1"

*Fig. IC*

*Fig. ID*

# Fig. IE

## Fig. 2A

## Fig. 2B

## Fig. 2C

# Fig. 3

| | |
|---|---|
| (a) | CLK I |
| (b) | CLK II |
| (c) | CLK III |
| (d) | Din |
| (e) | A |
| (f) | B |
| (g) | C |
| (h) | ① |
| (i) | ② |
| (j) | ③ |
| (k) | ④ |
| (l) | ⑤ |
| (m) | WD |
| (n) | PC |
| (o) | WI |

## Fig. 4 A

## Fig. 4 B

# Fig. 5

*Fig. 6*